# EUROPEAN PATENT SPECIFICATION

(11) **EP 3 299 480 B1**
(45) Date of publication and mention of the grant of the patent: **03.06.2020**
(21) Application number: 17770398.0
(22) Date of filing: 24.03.2017
(51) Int. Cl.: C21B 7/24, F27D 19/00, F27D 21/00, G01S 7/03, G01F 23/284, C21B 5/00, F27B 1/28

(54) **BLAST FURNACE CHARGE-MATERIAL SURFACE DETECTION DEVICE AND DETECTION METHOD**
ERKENNUNGSVORRICHTUNG UND ERKENNUNGSVERFAHREN FÜR LADEMATERIALOBERFLÄCHEN BEI EINEM HOCHOFEN
DISPOSITIF ET PROCÉDÉ DE DÉTECTION DE SURFACE DE MATÉRIAU DE CHARGE DE HAUT FOURNEAU

(30) Priority: 25.03.2016 JP 2016062229
(43) Date of publication of application: 28.03.2018
(73) Proprietor: Wadeco Co., Ltd., Amagasaki-shi, Hyogo 661-0021 (JP)
(72) Inventor: KAYANO Hayae, Amagasaki-shi Hyogo 661-0021 (JP); POLLOCK, Daniel Landrum, Amagasaki-shi Hyogo 661-0021 (JP)
(74) Representative: Brevalex
(86) International application number: PCT/JP2017/011972
(87) International publication number: WO 2017/164358

(56) References cited:
- WO-A1-2015/133005
- JP-A- H0 693 614
- JP-A- S61 290 378
- JP-A- 2012 067 340
- JP-A- 2014 133 922
- JP-A- 2017 048 421
- US-A- 4 290 067
- US-A- 4 332 374
- US-A- 4 858 892

## Description

### Technical Field

The present invention relates to an apparatus which transmits a detection wave such as a microwave or a millimeter wave into a blast furnace, receives the detection wave reflected by iron ore and coke that are charged into the furnace, and detects the surface profile of the burden, and also to a detection method.

### Background Art

In a blast furnace, in order to detect the surface profile of iron ore and coke which are charged into the furnace, a detection wave (transmission wave) is transmitted to the surface of the iron ore and coke, the detection wave (reception wave) reflected by the iron ore and the coke is received, and the distance to the iron ore and the coke, and the profile of the surface are detected from the time difference between the transmission wave and the reception wave, and the like. As the detection wave, a microwave or a millimeter wave is used because such a wave can be used at high temperature, and is hardly affected by suspended solids, water vapor, and the like in the furnace.

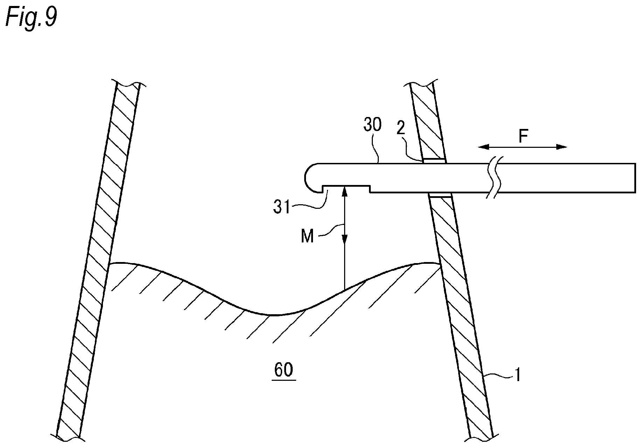

In a method for detecting the surface profile of such a burden, as shown in Fig. 9, a long lance 30 in which the tip end is opened, and an antenna (not shown) for transmitting a microwave is disposed at the other end is inserted through an opening 2 of a blast furnace 1, and the microwave is transmitted and received (the reference numeral M) through an opening portion 31 at the tip end while linearly moving the lance 30 in the direction of the arrow F. According to the method, the surface profile of the burden 60 along the movement direction of the lance 30 is obtained.

In the above-described method, however, only a linear surface profile along the movement direction of the lance 30 is obtained. Moreover, the lance 30 must be moved along the whole inner diameter of the blast furnace 1, and therefore the measurement requires a prolonged period of time. Furthermore, the lance 30 is a long member, and, when the lance is inserted into the furnace for a long period of time, bent by its own weight. This causes the measurement accuracy to be lowered, and moreover there is a possibility that operations of inserting and moving the lance into the furnace are hindered.

Therefore, the applicant has proposed in Patent Literature 1 a surface detection apparatus shown in Fig. 10. As illustrated, a measurement section A of the surface detection apparatus is disposed directly above an opening 2 which is formed in the vicinity of the top of a blast furnace 1, and a reflection plate 50 and an antenna 51 are oppositely housed in the measurement section A. The reflection plate 50 is configured so that the tilt angle with respect to the antenna or the opening is variable as indicated by the arrow X, and the reflection plate is rotatable about the axis of the antenna 51 in the direction of the arrow Y. During measurement, the reflection plate 50 is tilted while interlocking the swing in the X direction and the rotation in the Y direction, and the surface of the burden 60 is planarly scanned by a microwave M, whereby the surface profile of the burden is planarly measured.

### Citation List

Patent Literature documents JP2014-133922A and US4858892 are related to the problem of the characterization of the burden surface in blast furnaces.

Also relevant to the field is Japanese Patent No. 5,391,458

### Summary of Invention

### Technical Problem

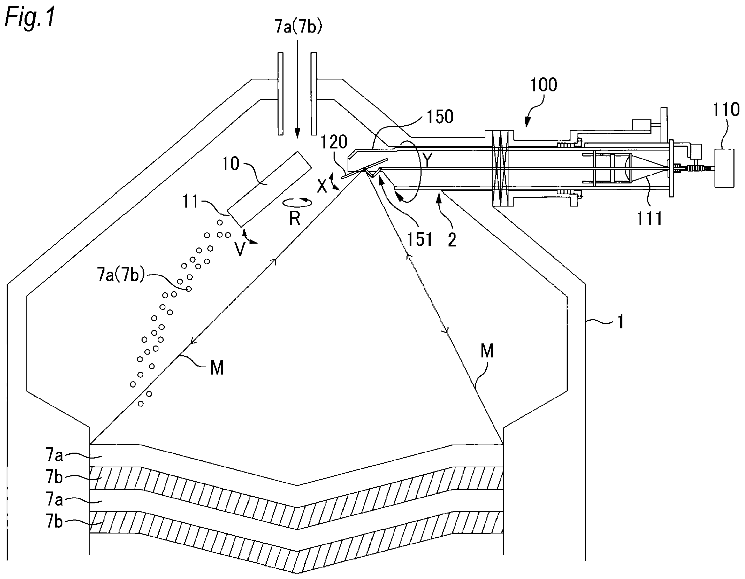

A shooter (see Fig. 1, the reference numeral 10) for supplying iron ore and coke, and a large bell are disposed directly below the top of the blast furnace 1. The measurement section A of the surface detection apparatus disclosed in Patent Literature 1 transmits the microwave M from an obliquely upper position with respect to the surface of the burden 60 so that the propagation path of the microwave M does not intersect the turning path of the shooter. In order to protect the measurement section A from heat in the furnace, moreover, the measurement section is placed with being separated from the opening 2 by a certain distance by, for example, interposing a sluice valve 55. Therefore, the thicker the sluice valve 55 is, the larger the opening 2 is. When two sluice valves 55 are disposed in order to improve the safety, the size of the opening 2 is extremely increased. Therefore, such a configuration is not realistic.

In the furnace, many suspended solids exist, and iron ore 7a and coke 7b are upwardly scattered. Such suspended solids enter the measurement section A through the opening 2, or iron ore 7a and coke 7b collide against the reflection plate 50. Therefore, the larger the opening 2 is, the more easily incursion or adherence of suspended solids, or collisions of the iron ore 7a and the coke 7b occurs, and hence there is a possibility that the measurement is affected. Moreover, the number of maintenance operations is increased.

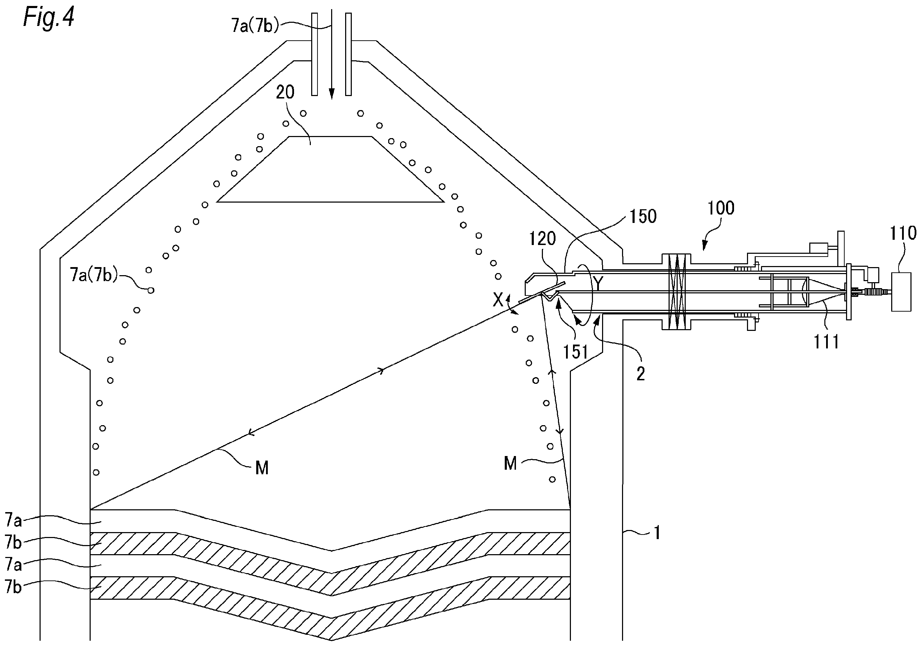

In a blast furnace including a large bell (see Fig. 4, the reference numeral 20), the measurement section A cannot be disposed above the large bell, and the microwave M cannot be transmitted from the obliquely upper side. In a blast furnace including the shooter 10, the shooter 10 turns, and therefore, even when the measurement section A is disposed above the shooter 10, and the microwave M is transmitted from the obliquely upper side, the measurement can be performed during a period when the shooter 10 does not impede the transmission/reception of the microwave M. As shown in Fig. 4, however, the large bell is an umbrella-like fixed structure in which the diameter is gradually increased toward the bottom of the furnace. Therefore, the microwave which is transmitted from the obliquely upward side is blocked by the large bell, and, even when the microwave is transmitted, only a profile which partially lacks is obtained.

Therefore, it is an object of the invention to measure the surface profile of the whole surface of a burden even in a blast furnace in which an opening for measurement can be minimized, and two sluice valves can be disposed in order to improve the safety, and which includes a large bell.

### Solution to Problem

In order to solve the problem, the invention provides the following surface detection apparatus of a blast furnace burden and detection method.
(1) A surface detection apparatus of a blast furnace burden, the surface detection apparatus which is configured to transmit a detection wave to a surface of a burden such as iron ore and coke that are charged into a blast furnace, and to receive a reflection wave of the detection wave, thereby detecting a surface profile of the burden, characterized by comprising:
   a guide portion which is cylindrical, and which has an opening portion that is formed by removing a part of a peripheral wall of one end of the guide portion;
   a reflection plate which is disposed directly above the opening portion;
   an antenna which is disposed at another end of the guide portion while being opposed to the reflection plate;
   guide portion rotating means which is configured to rotate the guide portion through a predetermined angle about an axis of the guide portion;
   guide portion moving means which is configured to move the guide portion to an inside or outside of the blast furnace; and
   reflection plate tilting means which is configured to tilt the reflection plate at a predetermined angle to an antenna side or an anti-antenna side, wherein
   the guide portion is inserted through an opening of a side wall of the blast furnace while disposing the opening portion on a side of the blast furnace,
   during measurement, after the guide portion is moved to a side of the blast furnace to protrude the opening portion into the furnace, the detection wave is sent from the antenna to the reflection plate, and the guide portion rotating means and the reflection plate tilting means are driven to cause the surface of the burden to be scanned planarly or linearly by the detection wave, and,
   during non-measurement, the guide portion is moved toward the outside of the blast furnace to retract the opening portion toward the furnace outside, or the guide portion is rotated to direct the peripheral wall other than the opening portion to the surface of the burden.
(2) The surface detection apparatus of the blast furnace burden according to (1) above, characterized in that, in the reflection plate tilting means,
   support shafts which are projected from both ends of the reflection plate are rotatably supported by the inner wall that is above the opening portion of the guide portion, a piston rod is coupled to one of the support shafts via a crank mechanism, and
   the piston rod is moved by a predetermined distance in an axial direction of the guide portion to swing the reflection plate through a predetermined angle via the crank mechanism.
(3) The surface detection apparatus of the blast furnace burden according to (1) or (2) above, characterized in that an inert gas is flown into an interior of the guide portion.
(4) The surface detection apparatus of the blast furnace burden according to any one of (1) to (3) above, characterized in that the opening portion is closed by a window made of a material through which the detection wave is transmittable.
(5) The surface detection apparatus of the blast furnace burden according to (4) above, characterized in that a frame member which surrounds the opening portion is disposed, the window is attached to the frame member, and an inert gas is ejected from a through hole which is disposed in the frame member on a side of an interior of the furnace with respect to the window.
(6) The surface detection apparatus of the blast furnace burden according to (4) or (5) above, characterized in that the window as a whole is inclined in a manner that one end edge of the window is in an upper side, the one end edge extending along the axis of the guide portion.
(7) The surface detection apparatus of the blast furnace burden according to any one of (4) to (6) above, characterized in that a metal net is disposed on a surface of the window, the surface being on a side of an interior of the furnace.
(8) The surface detection apparatus of the blast furnace burden according to any one of (1) to (7) above, characterized by comprising a propagation portion which extends concentrically with the guide portion from the antenna to a vicinity of the reflection plate, wherein the propagation portion propagates the detection wave, and the reflection plate tilting means is disposed in a space between the propagation portion and the guide portion.
(9) The surface detection apparatus of the blast furnace burden according to any one of (1) to (8) above, characterized in that a filter is disposed in front of the antenna via a gas impermeable diaphragm that is made of a material through which the detection wave is transmittable, thereby defining an interior of the guide portion, and an inert gas is supplied to a space between the diaphragm and the filter.
(10) The surface detection apparatus of the blast furnace burden according to any one of (1) to (9) above, characterized in that the blast furnace includes a large bell, and the guide portion is inserted into the opening which is formed at a location that is below the large bell on a side of a bottom of the furnace.
(11) A method of detecting a surface profile of a blast furnace burden, by transmitting a detection wave to a surface of a burden such as iron ore and coke that are charged into a blast furnace, and receiving a reflection wave of the detection wave, thereby detecting a surface profile of the burden, the method characterized by comprising:
   inserting a guide portion, which includes a reflection plate in an opening portion at one end, and an antenna at another end, and which is rotatable about an axis, into an opening of the blast furnace, a tilt angle of the reflection plate being variable;
   during measurement, after moving the guide portion to a side of the blast furnace to protrude the opening portion into the furnace, sending the detection wave from the antenna to the reflection plate, and driving the guide portion rotating means and the reflection plate tilting means to cause the surface of the burden to be scanned planarly or linearly by the detection wave; and,
   during non-measurement, moving the guide portion toward an outside of the blast furnace to retract the opening portion toward a furnace outside, or rotating the guide portion to direct a peripheral wall other than the opening portion to the surface of the burden.

### Advantageous Effects of Invention

According to the surface detection apparatus of the invention, an opening of a blast furnace can be kept to a minimum, incursion or adherence of suspended solids can be prevented from occurring, collisions of iron ore and coke can be largely suppressed, the surface profile of a burden can be measured correctly and rapidly, and the blast furnace can be operated optimally and stably.

### Brief Description of Drawings

[Fig. 1] Fig. 1 is a diagram showing a state where the surface detection apparatus of the invention is attached to a blast furnace.
[Fig. 2] Fig. 2(A) is a sectional view showing the surface detection apparatus of the invention during non-measurement, and Fig. 2(B) is a top plan view of Fig. 2(A).
[Fig. 3] Fig. 3 is a sectional view showing the surface detection apparatus of the invention during measurement.
[Fig. 4] Fig. 4 is a diagram showing a state where the surface detection apparatus of the invention is attached to a blast furnace including a large bell.
[Fig. 5] Fig. 5 is a sectional view of main portions showing the configuration where a window is disposed in an opening portion.
[Fig. 6] Fig. 6 is a sectional view taken along AA in Fig. 5.
[Fig. 7] Fig. 7 is a sectional view showing an example in which the window is formed by a knit fabric of Tirano fiber, taken along AA in Fig. 5.
[Fig. 8] Fig. 8(A) is a side sectional view showing an example in which a propagation portion for a detection wave is disposed, and Fig. 8(B) is a sectional view taken along BB.
[Fig. 9] Fig. 9 is a diagram showing a surface detection apparatus using a lance.

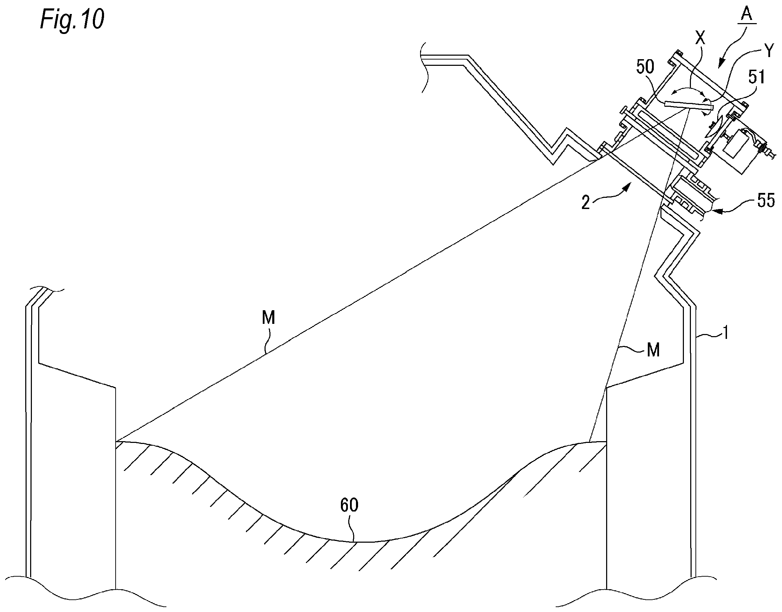

[Fig. 10] Fig. 10 is a diagram showing a surface detection apparatus of Patent Literature 1.

### Description of Embodiments

Hereinafter, the surface detection apparatus will be described in detail with reference to the drawings.

Fig. 1 is a schematic view showing a state where the surface detection apparatus of the invention is attached to a blast furnace. As illustrated, iron ore 7a and coke 7b (hereinafter, collectively referred to as "burden 7") which are charged from the top of the blast furnace 1 are sent to a shooter 10. In the shooter 10, turning in the R direction, and a pendulum motion in the V direction are performed in conjunction with each other, and the burden 7 is dropped from a charge port 11 to a predetermined position in the furnace.

The surface detection apparatus 100 includes a guide portion 150. A reflection plate 120 is disposed in an opening portion 151 which is formed at one end of the guide portion 150, and an antenna 111 which is connected to transmitting and receiving means 110 for a detection wave is disposed at the other end. The reflection plate 120 can vary the angle of tilting with respect to the antenna side or the anti-antenna side, and swings in the X direction. The guide portion 150 further rotates in the Y direction about the axis C, and, in accordance with the rotating, also the reflection plate 120 rotates in the same direction. While setting the opening portion 151 on the side of the blast furnace, then, the guide portion 150 is passed through an opening 2 which is disposed in the side wall of the blast furnace 1 or an inclining portion that is continuous from the furnace top to the side wall, so as not to impede the turning of the shooter 10.

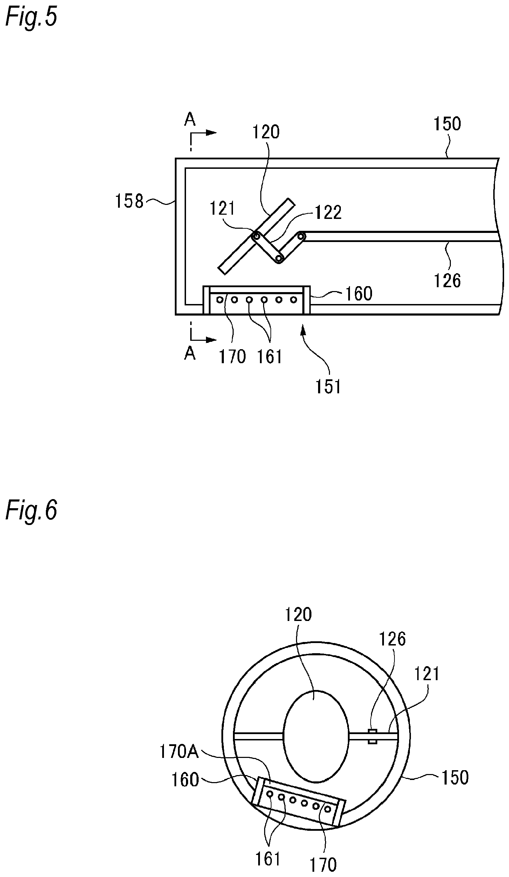

The opening 2 of the blast furnace 1 is requested only to allow the guide portion 150 to pass therethrough, can be formed so as to be slightly larger than the diameter of the guide portion 150, and therefore can be made extremely smaller than the opening 2 of the surface detection apparatus 100 of Patent Literature 1 shown in Fig. 6.

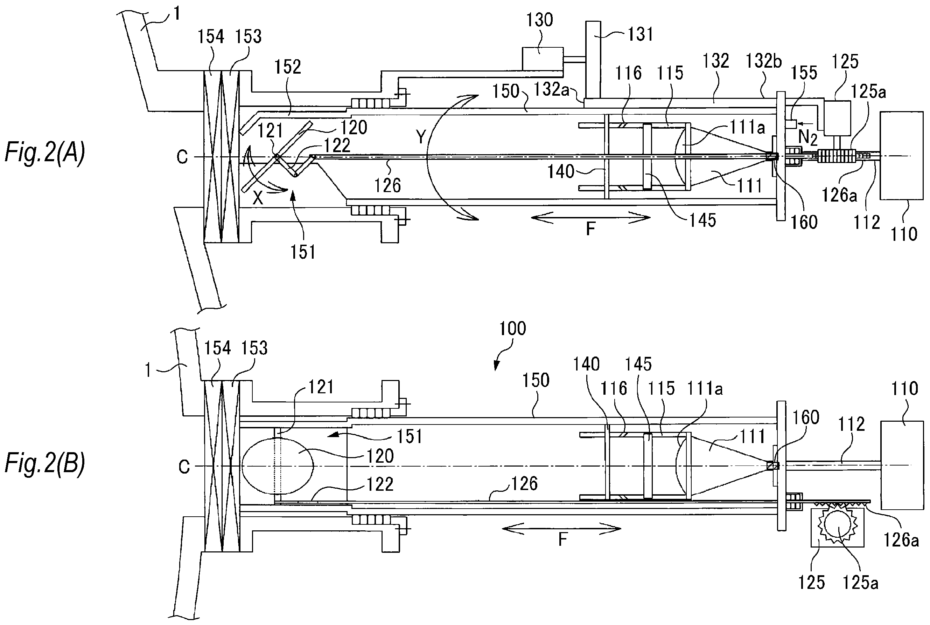

During measurement, after the surface detection apparatus 100 moves the guide portion 150 to the side of the blast furnace to protrude the opening portion 151 into the furnace, as illustrated, the detection wave from the antenna 111 is reflected by the reflection plate 120 to be sent (in the figure, the reference numeral M) into the furnace interior through the opening portion 151, and scans the surface of the burden 7 accumulated in the furnace, and the reflection wave of the detection wave is received by the transmitting and receiving device 110 through the reflection plate 120 and the antenna 111 to detect the surface profile of the burden 7. Although not illustrated (see Figs. 2(A) and 2(B)), during non-measurement or maintenance, the guide portion 150 is moved toward the outside of the blast furnace 1 to retract the opening portion 151 toward the furnace outside.

The guide portion 150 is required only to house the reflection plate 120 and the antenna 111, and therefore short in length. During measurement and non-measurement, only the guide portion 150 is requested to be protruded into the furnace, and also the moving distance is short. By contrast, a lance (for example, the reference numeral 30 in Fig. 9) must have a length which is similar to the inner diameter of the blast furnace, and also the moving distance is long. Although the configuration in which the guide portion 150 is moved inside and outside the blast furnace as described above is similar to the lance, the other configuration is entirely different from the lance.

Fig. 2(A) is a sectional view showing in detail the surface detection apparatus 100, and shows the guide portion 150 in a section taken along the axis of the guide portion. Fig. 2(B) is a top plan view of the guide portion, and shows the guide portion 150 in a section perpendicular to Fig. 2(A). Both the figures show the state during non-measurement, i.e., that in which the opening portion 151 is retracted to the outside of the furnace.

As illustrated, the guide portion 150 of the surface detection apparatus 100 is a cylindrical member made of a refractory material such as a metal. A part (in the illustrated example, an approximately lower half) of the peripheral wall of one end is removed over a predetermined length to form the opening portion 151, and the reflection plate 120 is disposed in the opening portion 151. In the other end portion of the guide portion 150, the antenna 111 is disposed while being opposed to the reflection plate 120. The transmitting and receiving means 110 for the detection wave is connected to the antenna 111 through a waveguide 112. As the detection wave, a microwave or a millimeter wave which is hardly affected by heat, and water vapor and the like in the furnace is used.

A guide portion-side gear 132 is attached to the outer circumference of the guide portion 150. The guide portion-side gear 132 is meshed with a guide portion-side motor gear 131 which is driven by a guide portion-side motor 130. The guide portion 150 is rotated through a predetermined angle about the axis C in the direction of the arrow Y by driving the guide portion-side motor 130.

The rotating angle in the Y direction is 180° at a maximum. When the guide portion is rotated by 180°, the opening portion 151 of the guide portion 150 is directed upward, the upper surface 152 of the opening portion 151 is directed toward the burden, and the burden 7 can be prevented from colliding against the reflection plate 120. Therefore, the guide portion-side gear 132 may have an annular shape which extends over the whole circumference of the outer circumferential surface of the guide portion 150, or alternatively a semi-annular shape which extends halfway around the outer circumference of the guide portion 150. Fig. 2(A) shows the guide portion-side gear 132 which is semi-annular.

Moreover, the reflection plate 120 is required only to change the tilt angle in the X direction, and therefore it is not necessary to extremely increase the opening width of the opening portion 151 in the circumferential direction. In the case where the opening width of the opening portion 151 in the circumferential direction is reduced, even when the opening portion 151 is not rotated by 180°, or when the opening portion 151 is rotated simply by, for example, about 90°, therefore, the peripheral wall (side wall) other than the opening portion 151 can be directed to the burden 7.

During non-measurement, the opening portion 151 can be retracted to the outside of the furnace as shown in Figs. 2(A) and 2(B). When the next measurement is to be conducted, however, the guide portion 150 must be again moved to protrude the opening portion 151 into the furnace, and therefore a period of time is required for the movement. During non-measurement, sluice valves 153, 154 are closed, and it is possible to completely prevent heat from the furnace interior, incursion of suspended solids, and collision of the burden 7 from occurring, but the time periods for opening and closing the sluice valves 153, 154 are required. While keeping the state during measurement, i.e., the state where the opening portion 151 of the guide portion 150 is protruded into the furnace interior, by contrast, the guide portion 150 is rotated in the Y direction, and the upper surface 170 or side surface of the opening portion 151 is directed toward the burden, whereby the time periods for moving the guide portion 150, and opening and closing the sluice valves 153, 154 are eliminated, and the time period required for measurement can be shortened. When the retracting operation is performed so that the opening portion 151 is stopped on the furnace interior side with respect to the sluice valves 153, 154, moreover, the measurement time can be shortened.

As illustrated, the two-valve configuration formed by the sluice valves 153, 154 enables the guide portion 151 to be completely retracted to the outside of the furnace while closing the sluice valves 153, 154, and the interior and exterior of the furnace to be doubly isolated from each other, whereby the safety can be enhanced.

When the measurement and non-measurement periods are switched, the guide portion 150 is moved from the position where the opening portion 151 is protruded into the furnace interior, to that where the opening portion 151 is retracted to the outside of the furnace (in the figure, the reference numeral F). The movement is performed by guide portion moving means which is not shown. As the guide portion moving means, for example, a mechanism may be employed in which the guide portion 150 is placed on a rail, and the guide portion 150 is pushed from the side of the antenna, or pulled toward the side of the antenna.

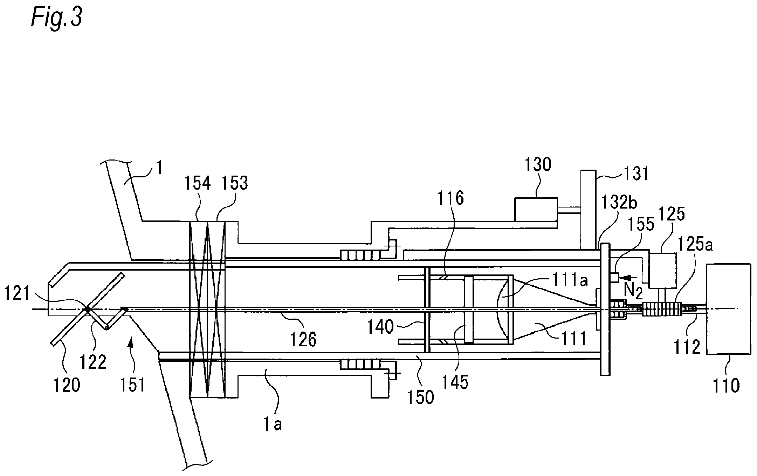

The guide portion-side motor 130 and the guide portion-side motor gear 131 are fixed to the blast furnace 1. The guide portion-side motor gear 131 is located so as to mesh with a reflection plate end portion 132a of the guide portion-side gear 132 in the state where, during the above-described movement of the guide portion 150, the opening portion 151 is retracted to the outside of the furnace. By contrast, the guide portion-side motor gear 131 is located so as to mesh with an antenna side end portion 132b of the guide portion-side gear 132 in the state where the opening portion 151 is protruded into the furnace interior as shown in Fig. 3. Therefore, the guide portion-side gear 132 is a wide gear having a length corresponding to the movement distance (stroke) of the guide portion 150.

On the other hand, reflection plate tilting means which controls the tilt angle of the reflection plate 120 to swing the reflection plate 120 in the X direction can be configured in the following manner.

Pin-like support shafts 121, 121 are projected from the both ends of the diameter of the reflection plate 120. The support shafts 121, 121 are rotatably supported by the inner wall that is in the vicinity of the opening portion 151 of the guide portion 150. Moreover, a crank mechanism 122 is coupled to the one support shaft 121, and a piston rod 126 is coupled to the crank mechanism 122. A rack gear 126a is attached to the other end of the piston rod 126. The rack gear 126a meshes with a piston rod-side gear 125a of a piston rod-side motor 125 which is disposed outside the guide portion 150. When the piston rod-side gear 125a is rotated through a predetermined angle by driving the piston rod-side motor 125, the rack gear 126a advances or retreats, and, in accordance with this, the piston rod 126 advances or retreats in the F direction. In association with this, the reflection plate 120 is tilted at a predetermined angle in the X direction via the crank mechanism 122.

As described above, the rotation of the guide portion 150 in the Y direction which is performed by the guide portion-side motor 130 is interlocked with the swing of the reflection plate 120 in the X direction which is performed by the piston rod-side motor 125, whereby the surface of the burden 7 can be planarly scanned by the detection wave transmitted from the antenna 111. When the operation of rotating the guide portion 150 is stopped, and only the operation of swinging the reflection plate 120 is performed, the surface of the burden 7 can be linearly scanned.

The surface detection apparatus 100 which is described above can be applied also to a blast furnace including a large bell. As shown in Fig. 4, namely, the opening 2 is formed below the furnace bottom side of a large bell 20, and the guide portion 150 of the surface detection apparatus 100 is inserted. In the same manner as described above, during measurement, then, the opening portion 151 is protruded into the furnace interior, and the surface of the burden 7 is linearly or planarly scanned by the microwave M while changing the angles in the X and Y directions of the reflection plate 120. In the case where the microwave is transmitted from the obliquely upper side of the large bell 20, the microwave is blocked by the large bell 20, and only a surface profile which partially lacks is obtained. However, the microwave M can be transmitted to the whole surface of the burden 7 without being blocked by the large bell 20, and therefore a profile of the whole surface of the burden 7 is obtained.

Various changes can be made in the surface detection apparatus 100, and the antenna 111 can be configured by a horn antenna, or alternatively by a lensed horn antenna as illustrated. A lens 113 is a semi-convex member which is made of a dielectric material such as ceramics, glass, or a fluorine resin, and allows the detection wave from the horn antenna to be transmitted while being converged. Since the lens is disposed, the horn length of the horn antenna can be shortened, whereby the length of the guide portion 150 can be further reduced. Although not shown, a parabola antenna may be used as the antenna 111.

During measurement, suspended solids intrude into the guide portion 151 through the opening portion 151. Therefore, an inert gas such as a nitrogen gas may be supplied into the guide portion 150. As illustrated, alternatively, a diaphragm 145 that is made of a gas impermeable material through which the detection wave is transmittable is placed in front of the antenna 111, and a filter 140 that is made of a refractory material through which the detection wave is transmittable is placed in front of the diaphragm 145, thereby defining the interior of the guide portion 150. The diaphragm 145 and the filter 140 are attached to a coupling member 115 which extends from the antenna 111. The inert gas such as a nitrogen gas is supplied from a gas supply port 158 which is disposed in an end portion of the guide portion 150, to flow into a space between the diaphragm 145 and the filter 140 through a vent hole 116 which is disposed in the coupling member 115. The vent hole 116 is inclined toward the filter, and the inert gas which is supplied to the space between the diaphragm 145 and the filter 140 passes through the filter 140 to flow out toward the reflection plate. The outflow inert gas reaches the reflection plate 120. Therefore, it is possible to prevent suspended solids which have intruded through the opening portion 151, from adhering to the reflection plate 120 and the filter 140, and correct detection can be stably performed.

As the filter 140, for example, a knit fabric formed by "Tirano fiber" produced by Ube Industries, Ltd. can be used. The Tirano fiber is a ceramic fiber which is configured by silicon, titanium, zirconium, carbon, and oxygen. An article which is produced by knitting the fiber into a planar member is a refractory gas permeable material through which a microwave or a millimeter wave is transmittable.

A plug material 160 made of, a material through which the detection wave is transmittable, such as a fluorine resin or ceramics may be inserted into a portion in which the antenna 111 and the waveguide 112 are coupled to each other.

Furthermore, the configuration which is described below may be employed.

As shown in Fig. 5, a furnace-side end surface of the guide portion 150 which is indicated by a reference numeral 158 is caused to hang down to the opening portion 151, and a frame member 160 is disposed so as to surround the opening portion 151. Then, a window 170 made of a material through which the detection wave is transmittable is disposed in the frame member 160 to close the opening portion 151. As the window 170, a plate of quartz glass or ceramics, a fabric formed by the above-described Tirano fiber, or the like can be used. The window 170 can prevent powder dust from entering from the furnace interior through the opening portion 151. Therefore, it is not necessary to, during non-measurement, move the guide portion 150 toward the outside of the furnace to retract the apparatus.

Moreover, power dust adheres to the surface of the window 170. In the frame member 160, therefore, through holes 161 are disposed on the side of the furnace interior with respect to the window 170, and, when a purge gas is ejected through the guide portion 150, it is possible to blow off adhering substances on the surface of the window 170. However, a fabric of the Tirano fiber is gas-permeable, and therefore a purge gas supplied from the guide portion 150 passes through the fabric of the Tirano fiber to be flown out toward the furnace. In the frame member 160, accordingly, it is not necessary to dispose the through holes 161.

In order to prevent the transmission wave transmitted from the antenna 111 from being reflected by the furnace-side end surface of the guide portion 150 to be received as noise by the antenna 111, the furnace-side end surface of the guide portion 150 may be formed as an inclined surface.

Furthermore, the window 170 is closest to the reflection plate 120, and hence there is a possibility that the reflection wave reflected by the window 170 is received to become noise. As shown in Fig. 6 (a sectional view taken along AA in Fig. 5), therefore, the window 170 is not formed as a horizontal plane which is opposed to the opening portion 151, but formed in a state where one end edge 170A is located on the upper side and on the side of the support shaft 121 with respect to the axis of the guide portion 150, and the window 170 is inclined as a whole. According to the configuration, the reflection wave reflected by the window 170 is prevented from being directly incident on the reflection plate 120, and the reflection wave reflected by the window 170 which will become noise can be eliminated. Preferably, the inclination angle is about 15° with respect to the support shaft 121.

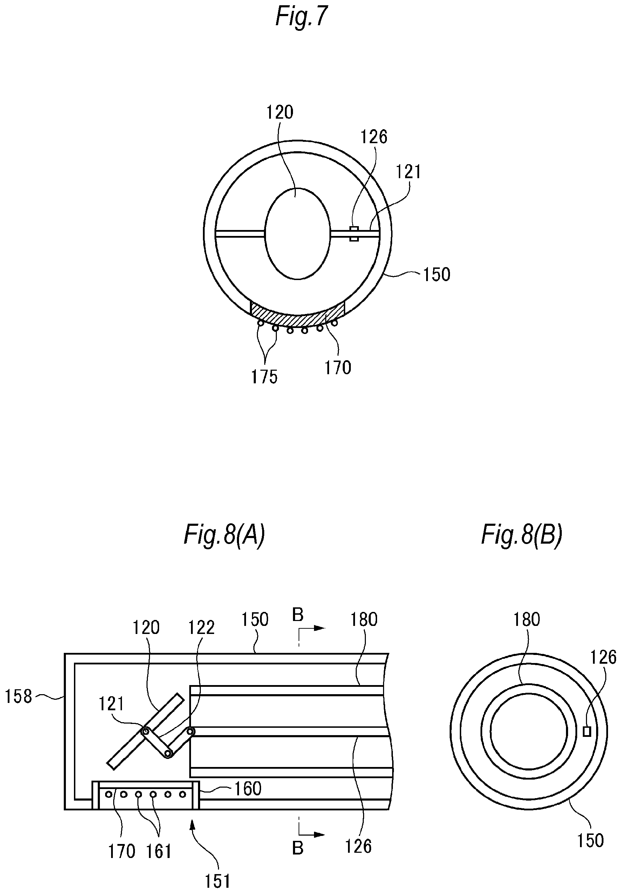

A relatively large lump such as iron ore or coke may sometimes collide with the window 170. Although not shown, therefore, it is preferable that a metal net having an appropriate mesh size is placed on the furnace side of the window 170 (see Fig. 7), and the window 170 is protected from collision with such a relatively large lump.

In the case of a fabric of the Tirano fiber, as shown in Fig. 7, an arcuate metal net 175 in which the curvature is identical with that of the guide portion 150 may be used, and the metal net 175 and the fabric of the Tirano fiber may be joined to each other, thereby forming the arcuate window 170. When the metal net 175 is attached to the opening portion 151, the window 170 is formed so as to extend along the outer diameter of the guide portion 150, and therefore the frame member 160 is not required.

The piston rod 126 is close to the reflection plate 120, and extends to the support shafts 121. Therefore, the detection wave is reflected also by the piston rod 126, and, when this reflection wave is received, noise is generated. As shown in Figs. 8(A) and 8(B), accordingly, a propagation portion 180 which extends from the antenna (not shown) to the vicinity of the front surface of the reflection plate 120 is placed concentrically with the guide portion 150, and the piston rod 126 is disposed outside the propagation portion 180. The detection wave propagates through the inside of the propagation portion 170, and therefore reflection due to the piston rod 126 is not received.

In the case where the window 170 is provided, powder dust from the interior of the furnace adheres to the window 170, and, in the case where the window 170 is not provided, such dust powder adheres to the reflection plate 120. In order to know the adhesion situation, the following operation may be performed.

Immediately after the surface detection apparatus 100 is attached to the blast furnace 1, the opening portion 151 of the guide portion 150 performs transmission and reception with a wall which is indicated by the reference numeral 1a in Fig. 3, and which forms the opening 2 of the blast furnace 1, and the initial reception intensity I₀ at this time is measured. Thereafter, actual measurements are conducted, the transmission and the reception are performed under same conditions at each of the measurements or at every predetermined number of measurements, and the reception intensity I_{T} at this time is measured. When the difference (I₀ - I_{T}) of the reception intensities attenuates to a threshold, the reflection plate 120 and the window 170 are cleaned. The threshold is adequately set to an attenuation rate of 50 to 70%.

Although the invention has been described in detail and with reference to the specific embodiment, it is obvious to a person skilled in the art that various changes and modifications can be made without departing from the scope of the invention.

The application is based on Japanese Patent Application (No. 2016-062229) filed March 25, 2016, and its disclosure is incorporated herein by reference.

### Industrial Applicability

The surface detection apparatus of the invention can minimize an opening of a blast furnace to prevent incursion or adherence of suspended solids from occurring, and also to largely suppress collisions of iron ore and coke, and measure correctly and rapidly the surface profile of a burden. Particularly, the invention can be preferably applied to a blast furnace including a large bell.

### Reference Signs List

- 1: blast furnace
- 2: opening
- 7: burden
- 7a: iron ore
- 7b: coke
- 10: shooter
- 20: large bell
- 100: surface detection apparatus
- 110: transmitting and receiving means
- 111: antenna
- 112: waveguide
- 120: reflection plate
- 121: support shaft
- 122: crank mechanism
- 125: piston rod-side motor
- 125a: piston rod-side gear
- 126: piston rod
- 126a: rack gear
- 130: guide portion-side motor
- 131: guide portion-side motor gear
- 132: guide portion-side gear
- 140: filter
- 145: gas impermeable diaphragm
- 150: guide portion
- 151: opening portion
- 160: frame member
- 161: through hole
- 170: window
- 180: propagation portion

## Claims

1. A surface detection apparatus of a blast furnace burden (7), the surface detection apparatus which is configured to transmit a detection wave to a surface of a burden such as iron ore and coke that are charged into a blast furnace, and to receive a reflection wave of the detection wave, thereby detecting a surface profile of the burden, **characterized by** comprising:
a guide portion (150) which is cylindrical, and which has an opening portion (151) that is formed by removing a part of a peripheral wall of one end of the guide portion;
a reflection plate (120) which is disposed directly above the opening portion;
an antenna (111) which is disposed at another end of the guide portion while being opposed to the reflection plate;
guide portion rotating means (130) which is configured to rotate the guide portion through a predetermined angle about an axis of the guide portion;
guide portion moving means which is configured to move the guide portion to an inside or outside of the blast furnace; and
reflection plate tilting means (122) which is configured to tilt the reflection plate at a predetermined angle to an antenna side or an anti-antenna side, wherein
the guide portion is inserted through an opening of the blast furnace while disposing the opening portion on a side of the blast furnace,
during measurement, after the guide portion is moved to a side of the blast furnace to protrude the opening portion into the furnace, the detection wave is sent from the antenna to the reflection plate, and the guide portion rotating means and the reflection plate tilting means are driven to cause the surface of the burden to be scanned planarly or linearly by the detection wave, and,
during non-measurement, the guide portion is moved toward the outside of the blast furnace to retract the opening portion toward the furnace outside, or the guide portion is rotated to direct a peripheral wall other than the opening portion to the surface of the burden.

2. The surface detection apparatus of the blast furnace burden according to claim 1, **characterized in that**, in the reflection plate tilting means,
support shafts which are projected from both ends of the reflection plate are rotatably supported by an inner wall that is above the opening portion of the guide portion, a piston rod is coupled to one of the support shafts via a crank mechanism, and
the piston rod is moved by a predetermined distance in an axial direction of the guide portion to swing the reflection plate through a predetermined angle via the crank mechanism.

3. The surface detection apparatus of the blast furnace burden according to claim 1 or 2, **characterized in that** an inert gas is flown into an interior of the guide portion.

4. The surface detection apparatus of the blast furnace burden according to any one of claims 1 to 3, **characterized in that** the opening portion is closed by a window made of a material through which the detection wave is transmittable.

5. The surface detection apparatus of the blast furnace burden according to claim 4, **characterized in that** a frame member which surrounds the opening portion is disposed, the window is attached to the frame member, and an inert gas is ejected from a through hole which is disposed in the frame member on a side of an interior of the furnace with respect to the window.

6. The surface detection apparatus of the blast furnace burden according to claim 4 or 5, **characterized in that** the window as a whole is inclined in a manner that one end edge of the window is in an upper side, the one end edge extending along the axis of the guide portion.

7. The surface detection apparatus of the blast furnace burden according to any one of claims 4 to 6, **characterized in that** a metal net is disposed on a surface of the window, the surface being on a side of an interior of the furnace.

8. The surface detection apparatus of the blast furnace burden according to any one of claims 1 to 7, **characterized by** comprising a propagation portion which extends concentrically with the guide portion from the antenna to a vicinity of the reflection plate, wherein the propagation portion propagates the detection wave, and a part of the reflection plate tilting means is disposed in a space between the propagation portion and the guide portion.

9. The surface detection apparatus of the blast furnace burden according to any one of claims 1 to 8, **characterized in that** a filter is disposed in front of the antenna via a gas impermeable diaphragm that is made of a material through which the detection wave is transmittable, thereby defining an interior of the guide portion, and an inert gas is supplied to a space between the diaphragm and the filter.

10. The surface detection apparatus of the blast furnace burden according to any one of claims 1 to 9, **characterized in that** the blast furnace includes a large bell, and the guide portion is inserted into the opening which is formed at a location that is below the large bell on a side of a bottom of the furnace.

11. A method of detecting a surface profile of a blast furnace burden, by transmitting a detection wave to a surface of a burden such as iron ore and coke that are charged into a blast furnace, and receiving a reflection wave of the detection wave, thereby detecting a surface profile of the burden, the method **characterized by** comprising:
inserting a guide portion, which includes a reflection plate in an opening portion at one end, and an antenna at another end, and which is rotatable about an axis, into an opening of the blast furnace, a tilt angle of the reflection plate being variable;
during measurement, after moving the guide portion to a side of the blast furnace to protrude the opening portion into the furnace, sending the detection wave from the antenna to the reflection plate, and driving guide portion rotating means and reflection plate tilting means to cause the surface of the burden to be scanned planarly or linearly by the detection wave; and,
during non-measurement, moving the guide portion toward an outside of the blast furnace to retract the opening portion toward a furnace outside, or rotating the guide portion to direct a peripheral wall other than the opening portion to the surface of the burden.

## Patentansprüche

1. Oberflächenerfassungsvorrichtung einer Hochofenladung (7), wobei die Oberflächenerfassungsvorrichtung eingerichtet ist, um eine Erfassungswelle auf eine Oberfläche einer Ladung wie Eisenerz und Koks zu übertragen, die in einen Hochofen geladen werden, und um eine Reflexionswelle der Erfassungswelle zu empfangen, wodurch ein Oberflächenprofil der Ladung erfasst wird, **gekennzeichnet durch**:
- einen Führungsabschnitt (150), der zylindrisch ist, und der einen Öffnungsabschnitt (151) aufweist, der durch Entfernen eines Teils einer Umfangswand eines Endes des Führungsabschnitts ausgebildet wird;
- eine Reflexionsplatte (120), die direkt über dem Öffnungsabschnitt angeordnet ist;
- eine Antenne (111), die an einem anderen Ende des Führungsabschnitts angeordnet ist, während sie der Reflexionsplatte gegenüberliegt;
- eine Führungsabschnitt-Dreheinrichtung (130), die eingerichtet ist, um den Führungsabschnitt um einen vorbestimmten Winkel um eine Achse des Führungsabschnitts zu drehen;
- eine Führungsabschnitt-Bewegungseinrichtung, die eingerichtet ist, um den Führungsabschnitt zu einer Innenseite oder Außenseite des Hochofens zu bewegen; und
- eine Reflexionsplatten-Kippeinrichtung (122), die eingerichtet ist, um die Reflexionsplatte in einem vorbestimmten Winkel zu einer Antennenseite oder einer Nicht-Antennen-Seite zu kippen, wobei der Führungsabschnitt durch eine Öffnung des Hochofens eingesetzt wird, während der Öffnungsabschnitt auf einer Seite des Hochofens angeordnet wird,
- wobei während der Messung, nachdem der Führungsabschnitt zu einer Seite des Hochofens bewegt wurde, um den Öffnungsabschnitt in den Ofen hineinragen zu lassen, die Erfassungswelle von der Antenne zur Reflexionsplatte gesendet wird, und die Führungsabschnitt-Dreheinrichtung und die Reflexionsplatten-Kippeinrichtung angetrieben werden, um zu bewirken, dass die Oberfläche der Ladung planar oder linear von der Erfassungswelle gescannt wird, und
- wobei, wenn keine Messung erfolgt, der Führungsabschnitt zur Außenseite des Hochofens bewegt wird, um den Öffnungsabschnitt zur Außenseite des Ofens zurückzuziehen, oder der Führungsabschnitt gedreht wird, um eine andere Umfangswand als den Öffnungsabschnitt zur Oberfläche der Ladung auszurichten.

2. Oberflächenerfassungsvorrichtung der Hochofenladung nach Anspruch 1, **dadurch gekennzeichnet, dass** in der Reflexionsplatten-Kippeinrichtung
- Stützwellen, die von beiden Enden der Reflexionsplatte hervorstehen, drehbar durch eine Innenwand abgestützt werden, die sich über dem Öffnungsabschnitt des Führungsabschnitts befindet,
- eine Kolbenstange mit einer der Stützwellen über einen Kurbelmechanismus gekoppelt ist, und
- die Kolbenstange um eine vorbestimmte Distanz in axialer Richtung des Führungsabschnitts bewegt wird, um die Reflexionsplatte um einen vorgegebenen Winkel über den Kurbelmechanismus zu schwenken.

3. Oberflächenerfassungsvorrichtung der Hochofenladung nach Anspruch 1 oder 2, **dadurch gekennzeichnet, dass** ein Inertgas in ein Inneres des Führungsabschnitts eingeleitet wird.

4. Oberflächenerfassungsvorrichtung der Hochofenladung nach einem der Ansprüche 1 bis 3, **dadurch gekennzeichnet, dass** der Öffnungsabschnitt durch ein Fenster geschlossen wird, das aus einem Material hergestellt ist, durch das die Erfassungswelle übertragbar ist.

5. Oberflächenerfassungsvorrichtung der Hochofenladung nach Anspruch 4, **dadurch gekennzeichnet, dass** ein Rahmenelement, das den Öffnungsabschnitt umgibt, angeordnet ist, das Fenster am Rahmenelement angebracht ist, und ein Inertgas aus einem Durchgangsloch ausgestoßen wird, das im Rahmenelement auf einer Seite eines Innenraums des Ofens in Bezug auf das Fenster angeordnet ist.

6. Oberflächenerfassungsvorrichtung der Hochofenladung nach Anspruch 4 oder 5, **dadurch gekennzeichnet, dass** das Fenster als Ganzes so geneigt ist, dass sich eine Endkante des Fensters auf einer Oberseite befindet, wobei sich die eine Endkante entlang der Achse des Führungsabschnitts erstreckt.

7. Oberflächenerfassungsvorrichtung der Hochofenladung nach einem der Ansprüche 4 bis 6, **dadurch gekennzeichnet, dass** ein Metallnetz auf einer Oberfläche des Fensters angeordnet ist, wobei sich die Oberfläche auf einer Seite eines Innenraums des Ofens befindet.

8. Oberflächenerfassungsvorrichtung der Hochofenladung nach einem der Ansprüche 1 bis 7, **gekennzeichnet durch** Aufweisen eines Ausbreitungsabschnitts, der sich konzentrisch mit dem Führungsabschnitt von der Antenne zu einer Umgebung der Reflexionsplatte erstreckt, wobei der Ausbreitungsabschnitt die Erfassungswelle ausbreitet, und ein Teil der Reflexionsplatten-Kippeinrichtung in einem Raum zwischen dem Ausbreitungsabschnitt und dem Führungsabschnitt angeordnet ist.

9. Oberflächenerfassungsvorrichtung der Hochofenladung nach einem der Ansprüche 1 bis 8, **dadurch gekennzeichnet, dass** ein Filter vor der Antenne durch eine gasundurchlässige Membran angeordnet ist, die aus einem Material hergestellt ist, durch das die Erfassungswelle übertragbar ist, wodurch ein Inneres des Führungsabschnitts ausgebildet wird, und ein Inertgas einem Raum zwischen der Membran und dem Filter zugeführt wird.

10. Oberflächenerfassungsvorrichtung der Hochofenladung nach einem der Ansprüche 1 bis 9, **dadurch gekennzeichnet, dass** der Hochofen eine große Glocke umfasst, und der Führungsabschnitt in die Öffnung eingesetzt ist, die an einer Stelle ausgebildet ist, die sich unterhalb der großen Glocke auf einer Seite eines Bodens des Ofens befindet.

11. Verfahren zum Erfassen eines Oberflächenprofils einer Hochofenladung durch Übertragen einer Erfassungswelle auf eine Oberfläche einer Ladung wie Eisenerz und Koks, die in einen Hochofen geladen werden, und zum Empfangen einer Reflexionswelle der Erfassungswelle, wodurch ein Oberflächenprofil der Ladung erfasst wird, wobei das Verfahren **gekennzeichnet ist durch**:
- Einsetzen eines Führungsabschnitts, der eine Reflexionsplatte in einem Öffnungsabschnitt an einem Ende und eine Antenne an einem anderen Ende umfasst und der um eine Achse drehbar ist, in eine Öffnung des Hochofens, wobei ein Kippwinkel der Reflexionsplatte variabel ist;
- Senden der Erfassungswelle von der Antenne zur Reflexionsplatte während der Messung, nachdem der Führungsabschnitt zu einer Seite des Hochofens bewegt wurde, um den Öffnungsabschnitt in den Ofen hineinragen zu lassen, und Antreiben der Führungsabschnitt-Dreheinrichtung und der Reflexionsplatten-Kippeinrichtung, um zu bewirken, dass die Oberfläche der Ladung planar oder linear von der Erfassungswelle gescannt wird; und
- Bewegen des Führungsabschnitts, wenn keine Messung erfolgt, zu einer Außenseite des Hochofens, um den Öffnungsabschnitt zu einer Außenseite des Ofens zurückzuziehen, oder Drehen des Führungsabschnitts, um eine andere Umfangswand als den Öffnungsabschnitt zur Oberfläche der Ladung auszurichten.

## Revendications

1. Appareil de détection de surface d'un matériau de charge de haut-fourneau (7),
l'appareil de détection de surface étant configuré pour transmettre une onde de détection à une surface d'un matériau de charge comme du minerai de fer et du coke qui sont chargés dans un haut-fourneau, et pour recevoir une onde de réflexion de l'onde de détection, en détectant de ce fait un profil de surface du matériau de charge,
**caractérisé en ce qu'**il comprend :
une portion de guidage (150) qui est cylindrique et qui a une portion d'ouverture (151) qui est formée par l'enlèvement d'une partie d'une paroi périphérique d'une extrémité de la portion de guidage ;
une plaque de réflexion (120) qui est disposée directement au-dessus de la portion d'ouverture ;
une antenne (111) qui est disposée à une autre extrémité de la portion de guidage tout en étant à l'opposé de la plaque de réflexion ;
un moyen de rotation de portion de guidage (130) qui est configuré pour faire tourner la portion de guidage à un angle prédéterminé autour d'un axe de la portion de guidage ;
un moyen de déplacement de portion de guidage qui est configuré pour déplacer la portion de guidage à un intérieur ou à un extérieur du haut-fourneau ; et
un moyen d'inclinaison de plaque de réflexion (122) qui est configuré pour incliner la plaque de réflexion à un angle prédéterminé vers un côté d'antenne ou vers un côté anti-antenne, dans lequel
la portion de guidage est insérée à travers une ouverture du haut-fourneau tout en disposant la portion d'ouverture sur un côté du haut-fourneau,
au cours d'une prise de mesure, après le déplacement de la portion de guidage vers un côté du haut-fourneau pour que la portion d'ouvertures fasse saillie dans le haut-fourneau, l'onde de détection est envoyée depuis l'antenne vers la plaque de réflexion, et le moyen de rotation de portion de guidage et le moyen d'inclinaison de plaque de réflexion sont commandés pour amener la surface du matériau de charge à être balayée de manière planaire ou linéaire par l'onde de détection, et
au cours d'une non-prise de mesure, la portion de guidage est déplacée vers l'extérieur du haut-fourneau pour rétracter la portion d'ouverture vers l'extérieur du haut-fourneau, ou la portion de guidage est tournée pour diriger une paroi périphérique autre que la portion d'ouverture vers la surface du matériau de charge.

2. Appareil de détection de surface du matériau de charge de haut-fourneau selon la revendication 1, **caractérisé en ce que**, dans le moyen d'inclinaison de plaque de réflexion,
des arbres de support qui sont saillants depuis les deux extrémités de la plaque de réflexion sont supportés, de manière à pouvoir tourner, par une paroi intérieure qui est au-dessus de la portion d'ouverture de la portion de guidage, une tige de piston étant couplée à l'un des arbres de support par l'intermédiaire d'un mécanisme de manivelle, et
la tige de piston est déplacée d'une distance prédéterminée dans un sens axial de la portion de guidage pour basculer la plaque de réflexion d'un angle prédéterminé par l'intermédiaire du mécanisme de manivelle.

3. Appareil de détection de surface du matériau de charge de haut-fourneau selon la revendication 1 ou 2, **caractérisé en ce qu'**un gaz inerte est envoyé dans un intérieur de la portion de guidage.

4. Appareil de détection de surface du matériau de charge de haut-fourneau selon l'une quelconque des revendications 1 à 3, **caractérisé en ce que** la portion d'ouverture est fermée par une fenêtre constituée d'un matériau permettant la transmission de l'onde de détection.

5. Appareil de détection de surface du matériau de charge de haut-fourneau selon la revendication 4, **caractérisé en ce qu'**un organe de cadre qui entoure la portion d'ouverture est disposé, la fenêtre est attachée à l'organe de cadre, et un gaz inerte est éjecté d'un trou traversant qui est disposé dans l'organe de cadre sur un côté d'un intérieur du haut-fourneau par rapport à la fenêtre.

6. Appareil de détection de surface du matériau de charge de haut-fourneau selon la revendication 4 ou 5, **caractérisé en ce que** la fenêtre dans son intégralité est inclinée de telle manière qu'un bord d'extrémité de la fenêtre soit dans un côté supérieur, l'autre bord d'extrémité s'étendant le long de l'axe de la portion de guidage.

7. Appareil de détection de surface du matériau de charge de haut-fourneau selon l'une quelconque des revendications 4 à 6, **caractérisé en ce qu'**un filet métallique est disposé sur une surface de la fenêtre, la surface étant sur un côté d'un intérieur du haut-fourneau.

8. Appareil de détection de surface du matériau de charge de haut-fourneau selon l'une quelconque des revendications 1 à 7, **caractérisé en ce qu'**il comprend une portion de propagation qui s'étend concentriquement avec la portion de guidage depuis l'antenne jusqu'à une proximité de la plaque de réflexion, dans lequel la portion de propagation propage l'onde de détection, et une partie du moyen d'inclinaison de plaque de réflexion est disposée dans un espace entre la portion de propagation et la portion de guidage.

9. Appareil de détection de surface du matériau de charge de haut-fourneau selon l'une quelconque des revendications 1 à 8, **caractérisé en ce qu'**un filtre est disposé devant l'antenne par l'intermédiaire d'un diaphragme imperméable au gaz qui est constitué d'un matériau permettant la transmission de l'onde de détection, en définissant de ce fait un intérieur de la portion de guidage, et un gaz inerte est fourni dans un espace entre le diaphragme et le filtre.

10. Appareil de détection de surface du matériau de charge de haut-fourneau selon l'une quelconque des revendications 1 à 9, **caractérisé en ce que** le haut-fourneau inclut une grosse cloche, et la portion de guidage est insérée dans l'ouverture qui est formée à un emplacement au-dessous de la grosse cloche sur un côté d'un fond du haut-fourneau.

11. Procédé de détection d'un profil de surface d'un matériau de charge de haut-fourneau, par la transmission d'une onde de détection à une surface d'un matériau de charge comme du minerai de fer et du coke qui sont chargés dans un haut-fourneau, et la réception d'une onde de réflexion de l'onde de détection, en détectant de ce fait un profil de surface du matériau de charge, le procédé étant **caractérisé en ce qu'**il comprend :
l'insertion d'une portion de guidage, qui inclut une plaque de réflexion dans une portion d'ouverture à une extrémité, et une antenne à une autre extrémité, et qui peut tourner autour d'un axe, dans une ouverture du haut-fourneau, un angle d'inclinaison de la plaque de réflexion étant variable ;
au cours d'une prise de mesure, après le déplacement de la portion de guidage vers un côté du haut-fourneau pour que la portion d'ouvertures fasse saillie dans le haut-fourneau, l'envoi de l'onde de détection depuis l'antenne vers la plaque de réflexion, et la commande du moyen de rotation de portion de guidage et du moyen d'inclinaison de plaque de réflexion pour amener la surface du matériau de charge à être balayée de manière planaire ou linéaire par l'onde de détection ; et
au cours d'une non-prise de mesure, le déplacement de la portion de guidage vers un extérieur du haut-fourneau pour rétracter la portion d'ouverture vers un extérieur du haut-fourneau, ou la rotation de la portion de guidage pour diriger une paroi périphérique autre que la portion d'ouverture vers la surface du matériau de charge.
